# EUROPEAN PATENT APPLICATION

(11) **EP 0 971 158 A1**
(43) Date of publication of application: **12.01.2000**
(21) Application number: 98910981.4
(22) Date of filing: 25.03.1998
(51) Int. Cl.: F16H 21/18, H02N 11/00, F03G 3/08

(54) **REVOLUTION ASSISTING DEVICE FOR A ROTATING BODY**

(30) Priority: 25.03.1997 JP 7187897
(71) Applicant: TAKARA, Muneaki, Naha-shi, Okinawa 901-0152 (JP)
(72) Inventor: TAKARA, Muneaki, Naha-shi, Okinawa 901-0152 (JP)
(74) Representative: Laufhütte, Dieter, Dr.-Ing.
(86) International application number: JP9801306
(87) International publication number: WO9843000

(57) **Abstract**

A revolution assisting device for a rotating body comprises the rotating body provided on an outer peripheral surface thereof with permanent magnets, and a shaft connected to the rotating body by means of a crank mechanism and provided with permanent magnets, the shaft effecting vertical movements to assist revolution of the rotating body. The revolution assisting device for a rotating body further comprises a first magnet section and/or a second magnet section adapted to be slidingly moved in a diametrical direction of the rotating body by means of the crank mechanism which comprises the rotating body mounted to a rotating axis of a crank shaft and a connecting rod mounted to a crank arm of the crank shaft, and a first magnetic field arranged along the vicinity of a part or an entirety of a circumference about the center of rotation of the rotating body for generating an attracting force between it and the first magnet section, and/or a second magnetic field arranged along the vicinity of a part or an entirety of a circular path, which the second magnet section draws on a side surface of the rotating body, by its sliding movements, for generating an attracting force between it and the second magnet section.

## Description

### TECHNICAL FIELD

The present invention relates to a revolution assisting device for a rotating body, which comprises the rotating body with permanent magnets provided on an outer peripheral surface thereof and a shaft connected to the rotating body by means of a crank mechanism and provided with permanent magnets, the shaft effecting vertical movements to assist revolution of the rotating body.

### BACKGROUND TECHNOLOGY

Hitherto, it is not known of a device for assisting revolution of a rotating body such as, for example, a flywheel or the like, by means of a magnetic means.

Therefore, the present invention has the object to provide a revolution assisting device for a rotating body such as, for example, a fly wheel or the like.

### DISCLOSRE OF THE INVENTION

In order to achieve the object of the present invention, a revolution assisting device for a rotating body according to a first embodiment of the present invention is configured such that a rotating body is mounted on a rotating central axis of a crank shaft; a first magnet section disposed to slidably move in a direction parallel to a diametrical direction of the rotating body by means of a crank mechanism which in turn comprises a connecting rod mounted on a crank arm of the crank shaft; and a first magnetic field disposed along the vicinity of a part or an entirely of a circumference having a rotational center of the rotating body as a central point so as to produce an attracting force together with the first magnet section.

The present invention in a second embodiment provides a revolution assisting device for a rotating body, in which a rotating body is mounted on a rotating central axis of a crank shaft; a second magnet section disposed to slidably move in a direction parallel to a diametrical direction of the rotating body by means of a crank mechanism which in turn comprises a connecting rod mounted on a crank arm of the crank shaft; and a second magnetic field disposed along the vicinity of a part or an entirely of a circular locus dawn on a side surface of the rotating body by a sliding movement of the second magnet section so as to produce an attracting force together with the second magnet section.

The present invention in a third embodiment provides a revolution assisting device for a rotating body, in which a rotating body is mounted on a rotating axis of a crank shaft; a first magnet section and a second magnet section each disposed to slidably move in a direction parallel to a diametrical direction of the rotating body by means of a crank mechanism which in turn comprises a connecting rod mounted on a crank arm of the crank shaft; a first magnetic field disposed along the vicinity of a part or an entirely of a circumference having a rotational center of the rotating body as a central point so as to produce an attracting force together with the first magnet section; and a second magnetic field disposed along the vicinity of a part or an entirely of a circular locus drawn on a side surface of the rotating body by a sliding movement of the second magnet section so as to produce an attracting force together with the second magnet section.

### BRIEF DESCRIPTION OF THE ACCOMPANYING DRAWINGS

Figure 1 is a view showing a portion of a crank mechanism for a revolution assisting device in an embodiment of the present invention.
Figure 2 is a view (1/2) showing an assembly of a portion of the device in the embodiment of the present invention.
Figure 3 is an exploded view (2/2) showing a portion of the device in the embodiment of the present invention.
Figure 4 is a view showing an arrangement of a magnet groups on the side surface of a rotating body of the device in the embodiment of the present invention.
Figure 5 is a schematic view illustrating a movement of a magnetic field of a second magnet section on the side of a connecting rod shaft in an arrangement of the magnet groups on the side surface of the rotating body of the device in the embodiment of the present invention.
Figure 6 is a schematic view illustrating a gap in an arrangement of the magnet groups on the side surface of the rotating body of the device in the embodiment of the present invention.
Figure 7 is a view showing an example of the construction of a first magnet section on the shaft side in the device in the embodiment of the present invention.
Figure 8 is a view showing an example of the construction of a second magnet section on the shaft side in the device in the embodiment of the present invention.
Figure 9 is a schematic view illustrating a mode of the manner of disposition of magnets in the device in the embodiment of the present invention.
Figure 10 is a schematic view illustrating another mode of the manner of disposition of magnets in the device in the embodiment of the present invention.
Figure 11 is a view showing another example of the arrangement of the magnet group on the side surface of the rotating body in the device in the embodiment of the present invention.
Figure 12 is a three-dimensional view showing the another example of the arrangement of the magnet group on the side surface of the rotating body in the device of Figure 11.
Figure 13 is a schematic view illustrating a movement of a magnetic field of the second magnet section on the connecting rod shaft side in the another example of the arrangement of the magnet group on the side surface of the rotating body in the device in the embodiment of the present invention.
Figure 14 is a view showing an example of the construction of a crank mechanism in another embodiment of the present invention.
Figure 15 is a view showing the arrangement of the magnet group disposed on the side surface of the rotating body in the embodiment of Figure 14.
Figure 16 is a view showing an example of the construction of the first magnet section and the second magnet section in the embodiment of Figure 14.
Figure 17 is a view showing another example of the crank mechanism of the revolution assisting device according to the present invention.
Figure 18 is a view of the embodiment of Figure 17, when looked from the direction of the rotating axis of the crank shaft.

### BEST MODES FOR CARRYING OUT THE INVENTION

The present invention will be described in more detail by way of examples with reference to the accompanying drawings.

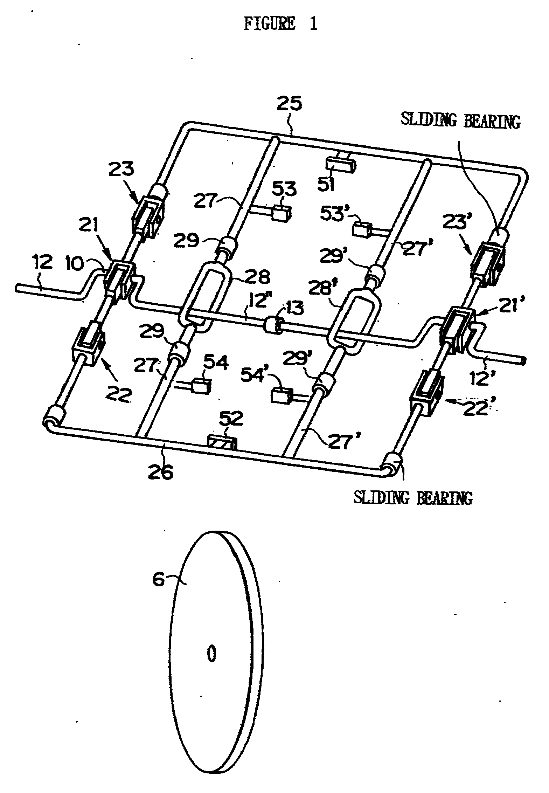

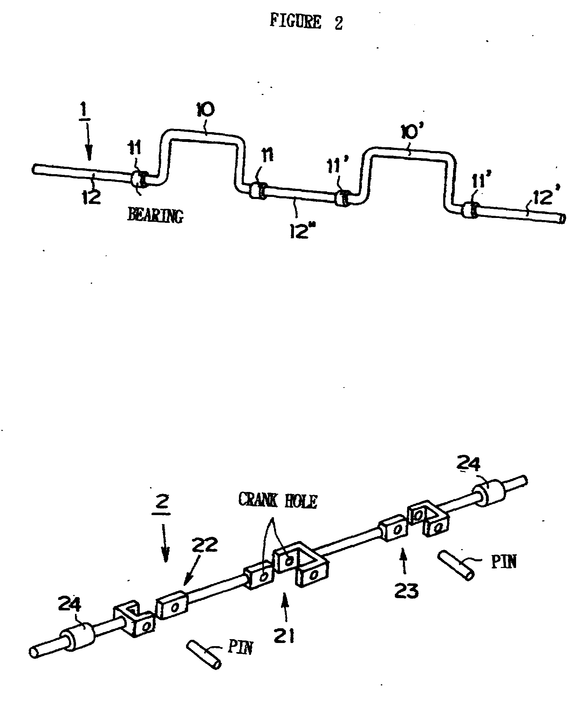

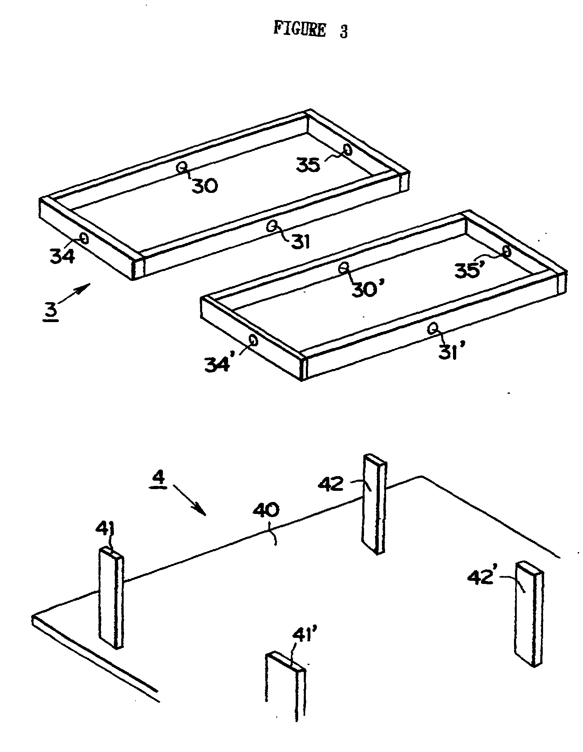

Figure 1 shows a structure of an assembly of a crank mechanism portion of a revolution assisting device for a rotating body according to a first embodiment of the present invention, and Figures 2 and 3 are views each showing the revolution assisting device for the rotating body according to an embodiment of the present invention. The revolution assisting device in this embodiment comprises a two-throw crank mechanism, and a two-throw crank shaft is identical to each other in respect of a crank size and a crank angle. One of the two-throw crank mechanism is distinguished from the other thereof by providing the same reference numeral with an apostrophe ('). It should be noted herein, however, that quotation of the crank mechanism portion having the reference numerals provided with the apostrophe (') is omitted from the description for brevity of explanation, unless otherwise needed.

As shown in Figure 2, a crank shaft 1 comprises a rotating axis 12 and a crank arm 10, and the rotating axis 12 being rotatably supported on a free bearing 11 fixed on a recipient member 3 as will be described hereinafter. The free bearing 11 may comprise a one-way bearing with a ratchet mechanism.

A connecting rod 2 has joint sections 21, 22 and 23. The joint section 21 acts as a direct joint section with the crank arm 10, and it is provided with a crank arm hole through which the crank arm 10 is mounted so as to extend over the entire length thereof. The joint sections 22 and 23 are mounted each with a pin so as to swingably move. Reference numeral 24 sets forth a slidable bearing fixed to the recipient member 3, as will be described hereinafter, and a shaft of the connecting rod is disposed so as to slide through the slidable bearing 24.

As shown in Figure 3, the recipient member 3 comprises a frame body for receiving the crank shaft 1 and the shaft of a connecting rod 2. The recipient member 3 is provided with crank shaft holes 30 and 31, through and into which the free bearing 11 of the crank shaft 1 is incorporated, and it is further provided with connecting rod shaft holes 34 and 35, through and into which the slidable bearing 24 of the connecting rod 2 is incorporated. This construction of the frame assembly of the recipient member 3 allows the crank arm 10 to rotate about the line connecting the crank shaft hole 30 to the crank shaft hole 31, and the shaft of the connecting rod 2 slides along the line connecting the connecting rod shaft hole 34 with the connecting rod shaft hole 35.

A base member 4 comprises a base portion 40 supporting the device in its entirely and leg portions 41 and 42. On the leg portions 41 and 42 is fixed the recipient member 3 in a spaced relationship apart from the base portion 40. With this construction, the crank mechanism mounted on the recipient member 3 can allow a crank movement.

Figure 1 shows the construction in which the connecting rod 2 is assembled with the crank shaft 1. The edge of the shaft of the connecting rod 2 is connected to the edge of the connecting rod 2' through a connecting member 25, and the edge on the side opposite to the shaft of the connecting rod 2 is connected to the edge on the opposite side of the connecting rod 2' through a connecting member 26. Moreover, two shafts 27 and 27' are each disposed between the connecting members 25 and 26. If the joint 28 of the shaft 27 does not enable a smooth movement of the connecting rod and the shaft, the shaft 27 is provided with a slidable bearing 29 and disposed on the recipient member 3.

Further, the rotating axis 12 of the crank shaft 1 is provided at its center with a fixing portion 13 to which a rotating body (a flywheel) 6 is fixed.

On the connecting member 25 is mounted a first magnet section 51, and on the connecting member 26 is mounted a first magnet section 52. On the shaft 27 is mounted a second magnet section 53. It is to be noted herein that a second magnet section 54 as shown in this figure has a construction as will be described hereinafter in connection with a modification of this example and it is not mounted in this embodiment. The first sections 51 and 52 can create a magnetic field that allows a vertical movement with respect to an outer peripheral surface (a surface on an edge side of the outer circumstance, and the same thing can be said hereinafter, unless other specified) of the rotating body 6. The second magnet section 53 can create a magnetic field for a horizontal movement with respect to the side surface of the edge of the rotating body 6 by conducting a vertical movement to along the side surface of the rotating body 6. Therefore, a circular locus is drawn in such a manner that it has a central point B deviated from the rotating central point A of the rotating body 6 with respect to the flat plane of revolution as will be described hereinafter.

On the rotating body 6 are mounted magnets along the entire circumference of the outer peripheral surface. The magnets are disposed so as for all the poles thereof on the side directed to the first magnet sections 51 and 52 to have the same poles, and the polarity of the first magnet sections 51 and 52 is determined so as to mainly create an attracting force therebetween. Each of the magnets to be used herein is a disk-shaped permanent magnet of 22 mm in diameter and 10 mm in thickness and has the N pole on its top side and the S pole on its bottom side. The magnets are disposed in a row so as for the same polarity to be directed to the same direction and for the both sides of a magnet to come into contact with the corresponding sides of the adjacent magnets. It should be noted herein that in addition to the disposition of the magnets over the entire length along the outer peripheral surface of the rotating body 6, the magnets may be disposed over a partial length, for example, along a semi-circumferential surface thereof. The manner of the disposition of the magnets can be determined as needed, whether they are disposed along the entire outer peripheral surface thereof or along a semi-circumferential surface thereof or over a partial length along the circumference thereof.

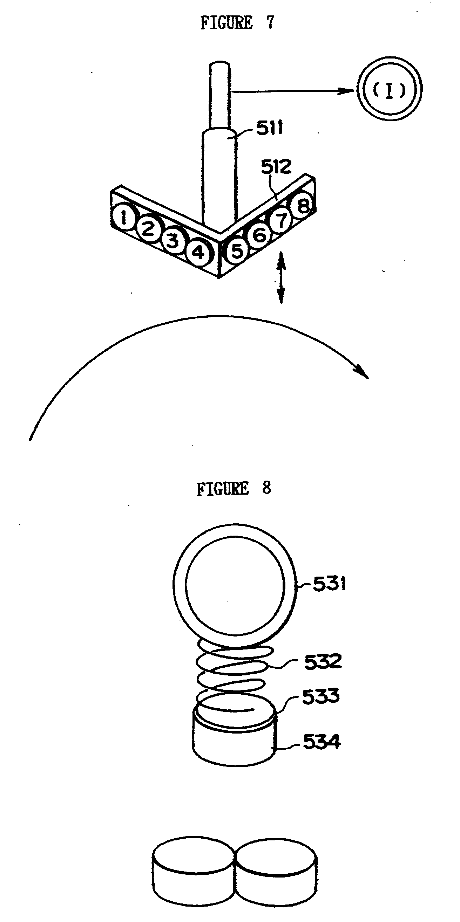

Figure 7 shows an example of the construction of the first magnet sections 51 and 52 mounted on the shaft of the connecting rod that vertically moves on the outer peripheral side of the rotating body 6. In this example, each of the first magnet sections 51 and 52 may be composed of metal mountings 511 and 512 as well as magnets. The metal mounting 511 is mounted on the connecting members 25 and 26, and the metal mounting 512 is shaped in a bent form in which it is bent angularly at a central portion thereof. On the angularly bend portions of the metal mounting 512 are mounted magnets in such a manner that round magnets (1) to (4), each magnet provided with the reference numeral enclosed herein with the parentheses being indicated as a magnet provided with a circle in the drawings (the same thing can be said so in the following description), are disposed so as for their polarity to create an attracting force with respect to the magnets on the outer peripheral surface of the rotating body 6, and round magnets (5) to (8) are disposed so as for their polarity to create a repulsive force with respect thereto. The angle of the angularly bend portions of the metal mounting 512 and the number of round magnets are optional. In the figure, the arc-shaped arrow indicates the direction of revolution of the rotating body 6.

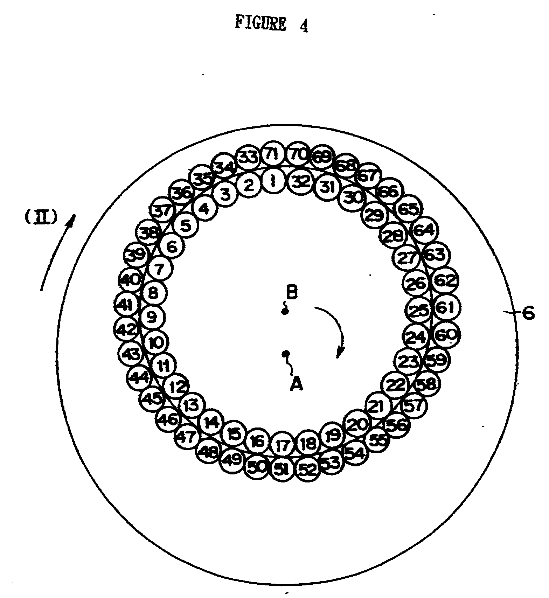

Figure 8 shows the construction of the second magnet section 53. The second magnet section 53 comprises a metal mounting as well as magnets, the metal mounting being mounted on the shaft of the connecting rod shaft 27 that can horizontally move along the side surface of the rotating body 6. The metal mounting may comprise a mounting ring 531 engageable with the shaft 27, a spring 532 fixed to the mounting ring 531, and a magnet-mounting iron plate 533 fixed to the spring 532 for mounting a magnet. To the magnet-mounting iron plate 533 is fixed a magnet 534. In an example as shown in the figure, only one magnet is mounted, however, the number of magnets is not restricted to one and it is optional. The spring 532 is disposed in such a manner that the second magnet section 53 can convert a minute degree of vibration into a stronger degree of vibration, upon horizontally moving the second magnet section 53, the minute degree of such vibration being caused to occur by the repulsive force and the attracting force created in a gap among a group of magnets mounted on the side surface of the rotating body 6 and disposed peripherally in a row (hereinafter referred to as "a parallel circumferential field"), as shown in Figure 4. Therefore, a spring is required, which is strong enough to react to a sufficient extent within the intensity of the magnetic field and in the distance between the field of a horizontal movement and the parallel circumferential field. Thus, the vibration becomes stronger as the gap in the parallel circumferential field is brought into an imbalance to a larger extent.

Figure 4 shows a group of magnets (an parallel circumferential field) to be mounted on the side surface of the rotating body 6, and the parallel circumferential field of the rotating body 6 as shown in Figure 4 is for the second magnet section 53. On the opposite side of the rotating body 6 is disposed another parallel circumferential field for a second magnet section 53'. In Figure 4, the rotating center of the rotating body 6 is referred to as point A and the central point of the circular locus drawn on the side surface of the rotating body by the second magnet section 53 is referred to as point B. The circular locus drawn therein has a radial length corresponding to the length of the connecting rod arm 10. With this configuration, the second magnet section 53 is allowed to move on the side surface of the rotating body 6 along the circumference of a circle with the point B centered, the point B being deviated from the rotating central point A, by vertically moving the connecting rod shaft 27. In other words, the magnetic field of the second magnet section 53 for the connecting rod shaft 27 draws a circular locus on the side surface of the rotating body 6 with the point B centered as a central point. The point B in Figure 4 is situated on a top dead center.

The magnet group on the side surface of the rotating body comprises round magnets, as indicated by reference numerals (1) to (71), inclusive, which are arranged on a flat plane along the circumference thereof. The magnets (1) to (16) are arranged so as to create a magnetic field having an attracting force that works for the magnetic field of the second magnet section 53 of the connecting rod shaft 27. The magnets (17) to (32) are arranged so as to create a magnetic field of a repulsive forte that works against the magnetic field of the second magnet section 53 thereof. On the other hand, likewise, the magnets (33) to (51) are arranged so as to create the magnetic field of an attracting force that works for the magnetic field of the second magnet section 53 of the connecting rod shaft 27,and the magnets (52) to (71) are arranged so as to create the magnetic field of a repulsive force that works against the magnetic field of the second magnet section 53 thereof.

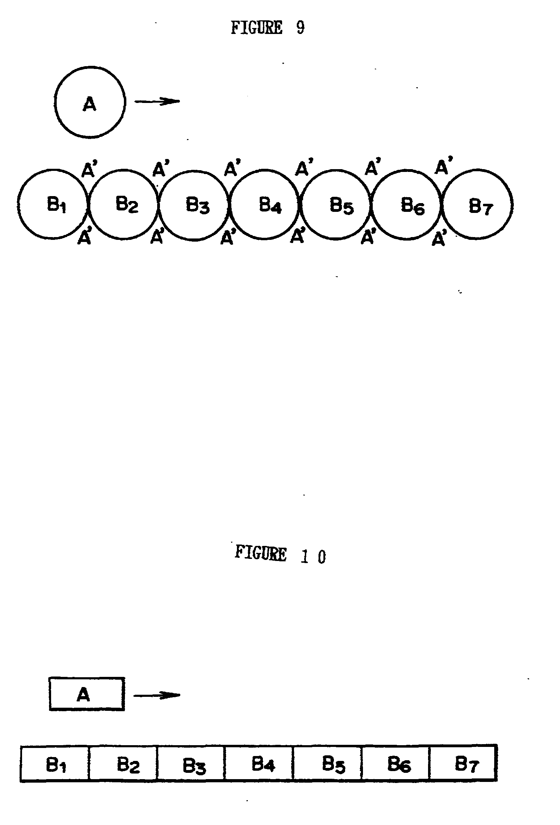

The magnets to be used herein may be each a disk-shaped round permanent magnet having a diameter of 22 mm and a thickness of 10 mm and having the N pole on the top thereof and the S pole on the bottom thereof, like the magnet as described above. The magnets are disposed in a row so as to allow the same polarity to be directed to the same direction and for each side of the magnet to come into contact with each of the sides of the adjacent magnets. This disposition of the magnets can provide a state in which the attracting field can move slidably on a straight line on which the magnets are disposed in a row. Figure 9 shows an example in which a magnet A is disposed so as to have the N pole against the S pole of each of magnets B1 to B7, inclusive, in such a manner that the N pole of the magnet A is attracting the S poles of the magnets B1 to B7. In this configuration, it can be considered that the N pole is caused to occur in a weak magnitude in a triangle-shaped region A' with the contact point between each circle of the adjacent magnets B1 to B7 as a top and with left-hand and right-hand sides symmetrical to each other and that, as a consequence, a weak repulsive field works, together with the attracting force, upon passage of the magnet A over the magnets B1 to B7. With this taken into account, substantially the same effects can be attained by a hollow round magnet. Moreover, when the effect of attraction alone is considered, a square-shaped magnet as shown in Figure 10 can also be used. In each case, the similar effect can be achieved because the opposite field can occur in the vicinity of the magnet.

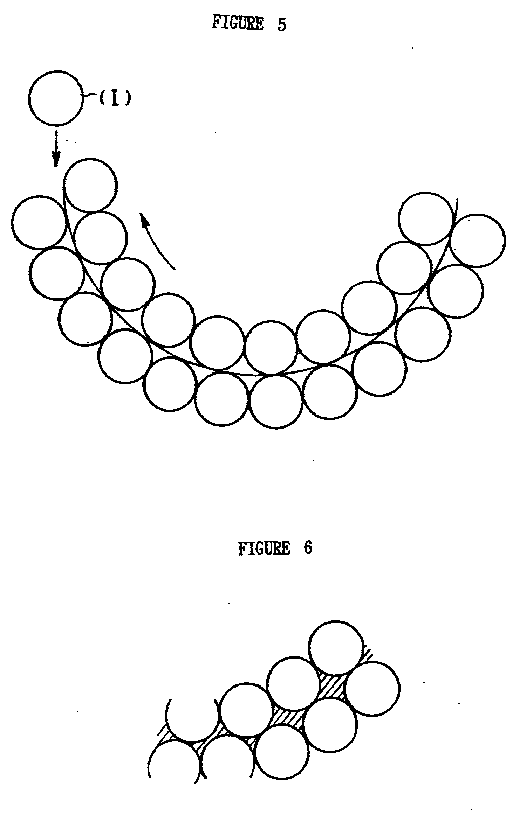

Figure 5 shows the state in which the magnetic field (I) of the second magnet section 53 of the connecting rod shaft 27 moves nearby the center of the magnetic field formed on the rotating body 6. Figure 6 shows a gap (as indicated by opaque line) formed in the intermediate position of the round magnets arranged on the side of the rotating body 6. As the gap is shaped in a different form from each other, the magnetic field occurring in the gap is also varied.

As shown in Figure 4, the magnetic field (I) of the second magnet section 53 of the connecting rod shaft 27 is located at a top dead center at this time. In this sate, the field (I) is located in the center of the three fields of the magnets (71), (1) and (32) with the magnet (71) disposed an top. For the magnetic field (I), the magnets (1) to (16) work each to produce an attracting force, the magnet (71) produces an attracting force, and the magnets (33) to (51) work each to produce a repulsive field. However, it is preferred to use with the magnetic force of the magnets (33), (71) and (70) excluded. What is of significance herein resides in that the magnetic field (I) of the top dead center is attracted inside the circle and pushed inside from outside by repulsion. The crank point B is pushed in the direction as indicated by the arrow. Further, the magnetic field (I) reaching the bottom dead center is provided with the action to being pushed outside by the repulsive field produced by the magnets (17) to (32) and the attracting field produced by the magnets (52) to (71). This provides the point B with a one-directional movement in the direction as indicated by the arrow. In this case, it is preferred to exclude the magnet (17). Whether the magnets (33) and (71) are to be excluded should be determined by the relationship of the magnetic field (I) with the distance between the magnets disposed on the upper and lower sides, however, the relationship is so subtle that which is better cannot be said. This may be determined by the intensity of the magnetic field because the magnetic field (I) is likely to enter into attraction from repulsion, but unlikely to enter into repulsion from attraction.

The gap as shown in Figure 6 provides a minute vibration of the magnetic field upon passage of the magnetic field (I). The gap may be formed in an optional manner.

The following is a description of an action of the revolution assisting device in the embodiment of the present invention.

The crank mechanism converts the vertical movement into a circular movement in an effective fashion, and the diameter of revolution becomes a stroke of amplitude of the vertical movement. The diameter of revolution is proportional to the size assisting the circular movement as it is by the law of a lever.

Therefore, the first magnet sections 51 and 52 for effecting the vertical movement of the shaft are disposed so as to act on the magnetic field of the outer peripheral surface of the rotating body 6, and the second magnet section 53 is disposed so as to act on the circumstance of the side surface of the rotating body 6.

The attracting force and the repulsive force are disposed so as to act on the tip of the vertical movement and the circular movement in the rotational direction.

If the attracting force acts between the magnetic field at the outer circumference of the rotating body 6 and the magnetic field of the vertical movement of the first magnet sections 51 and 52, when the crank moves toward the bottom dead center, the attracting force works as a force for pushing the crank and causes a revolution to occur. The revolution in turn works as a force for pulling the crank, and the inertia of revolution works as pushing the crank upward toward the top dead center, when the crank has reached the bottom dead center.

When the repulsive force for going off the magnetic field of the outer peripheral surface works upon this action, the repulsive force can work as pushing the crank upwardly or pulling it downwardly, producing a favorable relationship and consequently allowing the attracting force and the repulsive force to achieve the synergic effects.

The first magnet section of the shaft is the place where the bottom dead center of the crank approaches to the nearest position of the outer circumference of the rotating body.

The angle and shape of the magnetic field for the vertical movement of the first magnet section of the shaft can assume any appropriate angle and shape, as needed, and the magnetic field of the outer peripheral surface of the rotating body can also be disposed so as to assume any appropriate shape and angle, as needed. At this end, various ways can be

The first magnet sections for the vertical movement of the shaft may be disposed to work in the positions at the angle of 180° astride the rotating body so as to work at the outermost circumference surface thereof even at the top or bottom dead center. Therefore, the magnetic field on the outer circumference of the rotating body is interposed between the magnetic fields which always repeat amplitude, so that vibration of the magnetic field is caused to occur.

Various modifications and variations are feasible in practicing the present invention.

For example, in the embodiment of the present invention, a description has been made of the construction where only one of the magnetic section 53 is disposed on the side surface of the shaft 27. The present invention is not restricted to this construction, however, and it may include the construction in which another second magnet section 54 as shown in Figure 1 is further disposed on the shaft 27 and the corresponding parallel circumferential field is disposed on the side surface of the rotating body 6. This construction can double the force obtainable from the parallel circumferential field on the side surface of the rotating body.

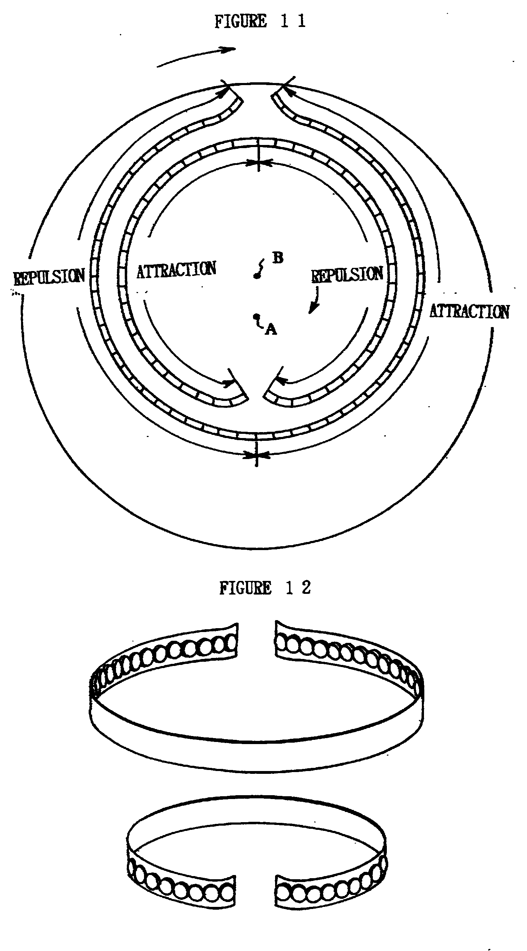

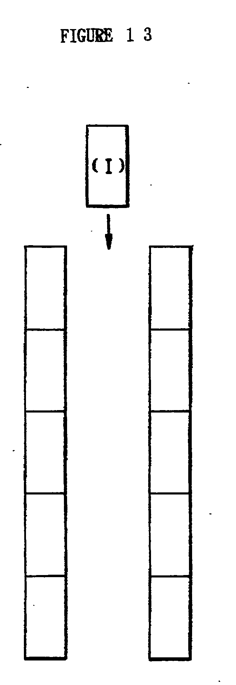

In another embodiment of the present invention, the parallel circumferential field on the side surface of the rotating body 6 may be formed in the manner as will be described hereinafter. Figure 11 is a view where the magnetic field is arranged so as to comprise a groove in which the parallel circumferential field disposed on the side surface of the rotating body 6 is parallel to the direction of the rotating axis. Figure 12 is a view of the parallel circumferential field of Figure 11. In this embodiment, the magnets are disposed so as for their polarity to be directed in the diametrical direction of a circle with the point B centered. Further, the circumferential arrangement of the magnets on the outer side is opened upwardly at its top portion, and the circumferential arrangement of the magnets on the inner side is opened downwardly at its bottom portion. This arrangement allows the second magnet section 53 to move readily. Figure 13 is a view showing the state in which the magnetic field (I) of the connecting rod shaft which is horizontally transferred passes through the groove.

This is the measure against the phenomenon that resistance may be caused to occur by pushing or pulling the magnetic field (I) passing through the parallel circumferential field on a flat plane as shown in Figure 4 on or from the connecting rod shaft 27 and that resistance occurs against a smooth vertical movement of the connecting rod shaft 27. In this modification, an action of the magnetic field can be given to the connecting rod shaft 27 in a smoother way. Further, as shown in Figure 13, the relationship between attraction and repulsion is caused to occur in a natural manner by allowing the N-S field of the magnetic field (I) to pass between the the N-N field on the semi-circumference and the S-S field of the semi-circumference. This construction causes a gap to be formed in the groove upon shifting from attraction to repulsion, thereby enabling the shift in a smoother fashion. Therefore, this construction is also effective for shifting the status of the magnetic field from repulsion to attraction. This construction can also be applied to the circumference side of the rotating body.

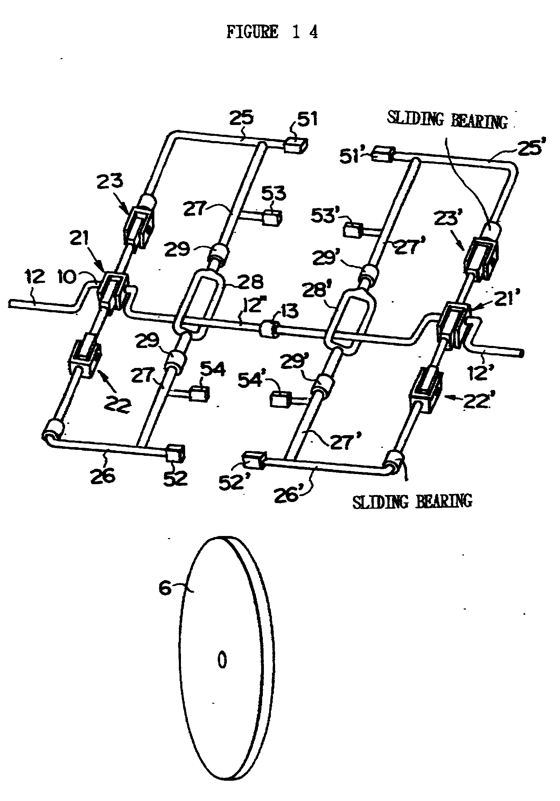

Figure 14 shows another embodiment of the present invention. This embodiment is directed to a system that assists revolution of the rotating body 6 by utilizing only the attracting force of a magnet. In this embodiment, the connecting members 25 and 26 as shown in Figure 1 are separated at their respective centers, and the first magnet sections 51 and 52 are disposed on the side of the connecting rod shaft 27 and the first magnet sections 51' and 52' are disposed on the side of the connecting rod shaft 27'. The length of a metal mounting (a mounting bar) protruding from the connecting rod shaft 27 and connecting each of the first magnet sections 51 and 52 thereto is the same length in the case of the second magnet section 53. The first magnet sections 51 and 52 as well as the second magnet section 53 are mounted on the metal mounting at an appropriate angle. The crank arms 10 and 10' can be adjusted for each to optionally assume an angle (a crank angle), with the axial direction of the crank shaft 1 centered, at from 0° to 360° with respect to the other. For example, a difference between the angles of the crank arms may be set to 90°.

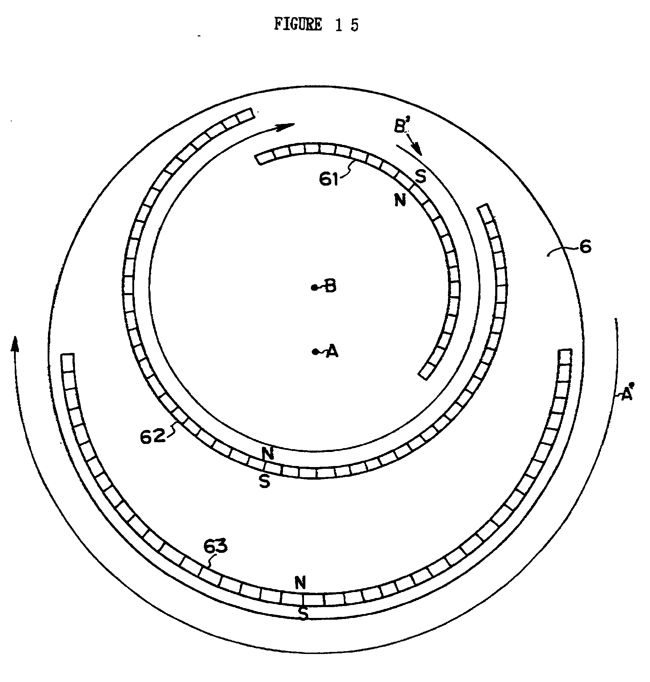

Figure 15 shows magnet groups mounted on the side surface of the rotating body 6 in this embodiment. In this figure, reference numerals 61 and 62 correspond to the parallel circumferential field in the previous embodiment, and reference numeral 63 corresponds to the magnet groups mounted on the outer peripheral surface of the rotating body 6 in the previous embodiment. Therefore, in this embodiment, no magnets are mounted on the outer peripheral surface of the rotating body 6. Each of the magnet groups 61, 62 and 63 is arranged so as for the polarity to be directed in the diametrical direction of the rotating body 6, like in the embodiment as shown in Figure 12.

The magnet group 63 is disposed along the semi-circumference of a circle with the rotating central point A of the rotating body 6 centered. In this embodiment, the polarity directed to the side of the central point A is all the N pole, while the polarity directed to the outer peripheral surface side is all the S pole. On the other hand,the magnet group 61 is disposed along the generally semi-circumference of a circle with the point B of the rotating body 6 centered. In this embodiment, the polarity directed to the side the point B is all the N pole, while the polarity directed to the outer peripheral surface side is all the S pole. Likewise, the magnet group 62 is disposed along the generally three quarters of the circumference of a circle with the point B centered, and the polarity directed to the side the point B is all the N pole, while the polarity directed to the outer peripheral surface side is all the S pole.

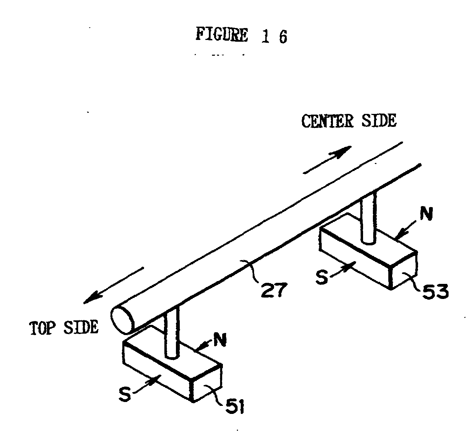

Figure 16 shows a detailed construction of the first magnet section 51 and the second magnet section 53 mounted on the connecting rod shaft 27. As shown therein, each of the first magnet section 51 and the second magnet section 53 has its polarity directed to the tip side, when looked from the central position of the connecting rod shaft 27, set to be the S pole and its polarity directed to the central position side set to be the N pole. Therefore, an attracting force is caused to occur between the N pole of the first magnet section 51 and the S pole of the magnet group 63, and the second magnet section 53 allows an attracting force to act between the magnet groups 61 and 62.

It can be noted herein that the magnets are likewise arranged on the back side of the rotating body 6 for the side of the crank arm 10'.

In this embodiment, the second magnet group 53 can act an magnetically attracting force between the magnet groups 61 and 62, thereby causing rotating the rotating body 6 and sliding the second magnet section 53 by the crank arm 10. Therefore, the second magnet section 53 is allowed to move along the circumference (along the curved arrow B' in the figure) passing through the center between the circumference on which the magnet group 61 is disposed and the circumference on which the magnet group 62 is disposed. On the other hand, the first magnet group 51 acts a magnetically attracting force together with the magnet group 63, thereby rotating the rotating body 6 and allowing the crank arm 10 to slidably move the first magnet group 51. This configuration can move the first magnet group 51 to go far off from the magnet group 63 at the crank top dead center and to approach thereto to the closest position at the crank bottom dead center, while rotating in the direction as indicated by the arrow A' with respect to the magnet group 63.

In this embodiment, the magnet groups each having the same pattern as shown in Figure 15 are disposed on both the side surfaces of the rotating body 6, however, the present invention is not restricted to this configuration. There are various modifications and variations in which, for example, only the magnet group 61 is mounted on one side surface of the rotating body 6 and the magnet groups 62 and 63 are mounted on the other side surface thereof or the magnet groups having substantially the same pattern as shown in Figure 15 are mounted on one side surface of the rotating body 6 and only the magnet group 61 is mounted on the other side surface thereof, while the angle of each of the crank arms 10 and 10' is set to be identical to each other.

In the embodiments as described above, the connecting rod shaft provides a pair of shaft magnetic fields in which the first magnet sections 51 and 52 are disposed at the positions opposite to each other at 180°. It is to be noted herein, however, that the present invention is not restricted to this particular configuration. It is preferred that a plurality of shaft magnetic fields are disposed on the circumference of the rotating body. In this embodiment, a necessary number of connecting rods is incorporated in the crank axis and disposed each at an angle as needed, whichever the polarity is. This configuration can be arranged so as to provide the field for the vertical movement at each pole. For example, when there are used three groups of magnets, each group being composed of a pair of magnets interposing clamping the outer peripheral surface of the rotating body, and disposed in a spaced relationship apart by 120°, the vibration of the magnetic field can be provided, which comes closer to the nearest point of the circumference of the rotating body 6 at an angle of 60° each.

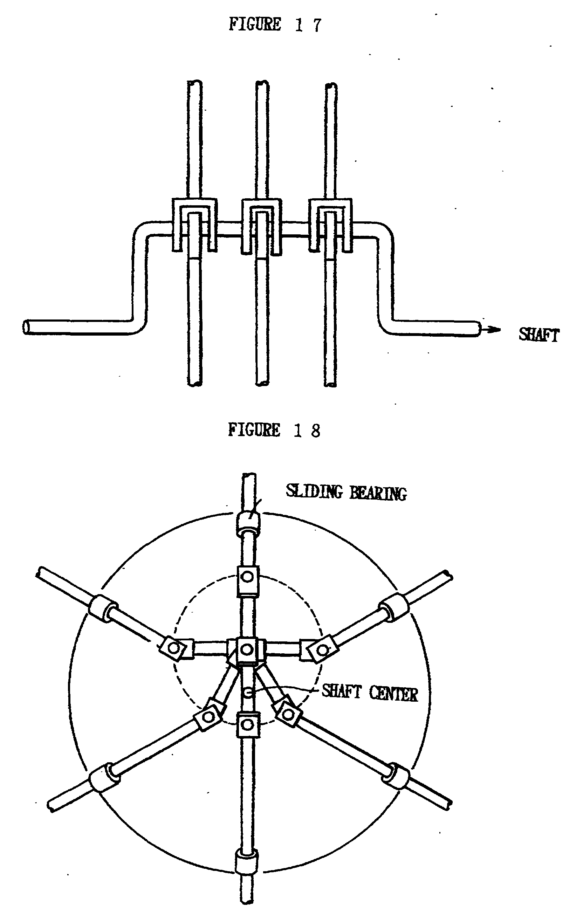

Figure 17 shows the mechanism by which the fields having six poles are operated on the circumference of the rotating body 6 at an angle of 60° each. In this embodiment, three pairs of connecting rod shafts are mounted on the one side of a two-throw crank shaft. Figure 18 is a view of the connecting rod shafts of Figure 17, when looked from the direction of the rotating axis. Further, in this embodiment, the two-throw crank shaft comprises a pair of crank shafts, and three pairs of connecting rod shafts, totaling to six shafts, are mounted on the crank shaft. The three pairs of the connecting rod shafts and the two-throw crank shaft are mounted on one recipient member which is divided into six sections each at 60°. The shafts in this configuration can be operated continually one after another so as to produce an operating magnetic field on the outer peripheral and side surfaces of the rotating body. Therefore, this configuration is very effective for creating such an operating magnetic field.

If the magnetic field of the shaft and the magnetic field of the rotating body are required to be located always in a constant distance, whether it is at the top dead center or the bottom dead center of the crank, the rotating body can comprise a rotating body with its center deviated by the radius of the crank. Further, if an optional shape would be sought to be used, the rotating body may assume any optional shape including, for example, an oval-shaped rotating body and so on.

The rotating body having its center deviated in the manner as described above can be provided with the effect as a flywheel. It can be noted, however, that the effect as a flywheel can also be imparted by varying the weight of a portion of the rotating body without deviating the center of the rotating body in the above manner.

The embodiments of the present invention use only one rotating body 6, however; they may use a plurality of rotating bodies disposed in a row or in plural rows.

When this mechanism for allowing the tip of the vertical movement of the crank to effectively act as a magnetic field on the circumference is applied to a rotating body such as an input layer or otherwise for a rotating device composed of a flywheel, as disclosed in our copending International Application (International Publication No. WO93/07387), and to a rotating body such as an input layer or otherwise of a rotating device composed of a ring-shaped wheel, as disclosed in International Application (International Publication No. WO93/09589), higher effects can be achieved.

The circumferential field and the field of the connecting rod shaft in the planar field of the rotating body can be utilized as a matter of course on the coaxial circle in the same manner as on the outer circumference.

The larger the diameter of the rotating body to be utilized, the more the fields on a flat plane in plural layers can be utilized.

In a further modification, the first magnet sections connected to the connecting members 25 and 26 and slidably moving in a vertical direction (in the axial direction of the shaft 27, etc.) may be disposed at the position outside the outer peripheral surface of the rotating body 6 on the diametrical line intersecting at a right angle at the rotating central point A of the rotating body 6 with the line connecting the first magnet section 51 with the line connecting between the first magnet section 52 in the previous embodiments. With this configuration, the first magnet sections can move so as to approach to the outer peripheral surface of the rotating body 6 and to go far off therefrom while the side surface of the rotating body 6 is caused to vibrate to the right and left in the planar direction at the position outside the outer peripheral surface of the rotating body 6. In a still further modification, another rotating body having a rotating side surface on the same plane as the side surface of the rotating body 6 is disposed outside the outer peripheral surface of the rotating body 6 and the another rotating body is provided with a magnet section corresponding to the first magnet section as in the previous embodiments. In such a still further modification, such another rotating body can be configured in that it is connected to the rotating body 6 by means of a chain mechanism, a gear mechanism or otherwise and rotating it in the direction opposite to that of the rotating body 6.

### Industrial Utilization

The revolution assisting device according to the present invention can be used for assisting the revolution of a rotating body such as a flywheel and so on.

## Claims

1. A revolution assisting device for a rotating body, wherein: the rotating body is mounted on a rotating central axis of a crank shaft; a first magnet section adapted to move slidably in a direction parallel to a diametrical direction of the rotating body by means of a crank mechanism which in turn comprises a connecting rod mounted on a crank arm of the crank shaft; and a first magnetic field arranged along the vicinity of a part or an entirety of a circumference about the center of rotation of the rotating body for generating an attracting force between it and the first magnet section.

2. A revolution assisting device for a rotating body, wherein: the rotating body is mounted on a rotating central axis of a crank shaft; a second magnet section adapted to move slidably in a direction parallel to a diametrical direction of the rotating body by means of a crank mechanism which in turn comprises a connecting rod mounted on a crank arm of the crank shaft; and a second magnetic field arranged along the vicinity of a part or an entirety of a circular locus drawn on a side surface of the rotating body by slidably moving the second magnet section for generating an attracting force between it and the second magnet section.

3. A revolution assisting device for a rotating body, wherein: the rotating body is mounted on a revolution center axis of a crank shaft; a first magnet section and a second magnet section each adapted to move slidably in a direction parallel to a diametrical direction of the rotating body by means of a crank mechanism which in turn comprises a connecting rod mounted on a crank arm of the crank shaft; a first magnetic field arranged along the vicinity of a part or an entirety of a circumference about the center of rotation of the rotating body for generating an attracting force between it and the first magnet section; and a second magnetic field arranged along the vicinity of a part or an entirety of a circular locus drawn on a side surface of the rotating body by slidably moving the second magnet section for generating an attracting force between it and the second magnet section.

4. The revolution assisting device as claimed in claim 1 or 3, wherein: said first magnetic field is disposed along an outer peripheral side surface of the rotating body; and said first magnet section is disposed outside an outer peripheral side of the rotating body to slidably move in a direction parallel to a diametrical direction of the rotating body so as to approach closer to or go far off from said first magnetic field.

5. The revolution assisting device as claimed in claim 1 or 3, wherein: said first magnetic field is disposed along a side surface of the rotating body; and said first magnet section is disposed outside to slidably move in a direction parallel to a diametrical direction of the rotating body so as to approach closer to or go far off from said first magnetic field.

6. The revolution assisting device as claimed in claim 2 or 3, wherein said second magnetic field has a portion with a polarity exerting an attracting force upon the second magnet section inside or outside along apart or an entirety of the circular locus.
